# EUROPÄISCHE PATENTSCHRIFT

(11) **EP 2 988 585 B1**
(45) Veröffentlichungstag und Bekanntmachung des Hinweises auf die Patenterteilung: **19.07.2017**
(21) Anmeldenummer: 14725602.8
(22) Anmeldetag: 14.04.2014
(51) Int. Cl.: A01C 5/06

(54) **DOPPELSCHEIBENSCHAR**
DOUBLE DISC COULTER
SOC À DOUBLE DISQUE

(30) Priorität: 26.04.2013 DE 102013007234
(43) Veröffentlichungstag der Anmeldung: 02.03.2016
(73) Patentinhaber: Lemken GmbH & Co. KG, 46519 Alpen (DE)
(72) Erfinder: GEBBEKEN, Martin, 46519 Alpen (DE); WERRIES, Dieter, 46519 Alpen (DE); PAEßENS, Christian, 47661 Issum (DE); LUKAS, Thomas, 48683 Ahaus Wüllen (DE); BERENDSEN, Mark, NL-7044 AJ Lengel (NL); GOTZEN, Christian, 41751 Viersen (DE); GERAATS, Marcel, 41334 Nettetal (DE); BERGERFURTH, Dennis, 46459 Rees (DE)
(74) Vertreter: Schulte & Schulte
(86) Internationale Anmeldenummer: PCT/DE2014/000190
(87) Internationale Veröffentlichungsnummer: WO 2014/173385

(56) Entgegenhaltungen:
- WO-A1-85/05246
- DE-A1-102010 037 240
- DE-B- 1 295 260
- FR-A- 1 212 364
- US-A- 6 082 276

## Beschreibung

Die Erfindung betrifft ein Doppelscheibenschar gemäß dem Oberbegriff des Patentanspruchs 1.

Doppelscheibenschare werden insbesondere zum Einbringen von landwirtschaftlichen Produkten wie Saatgut oder Düngestoffen in den Boden verwendet und zeichnen sich durch ihre geringe Anfälligkeit gegen Verstopfungen aus. Durch die angewinkelte Stellung der Scheibenschare zueinander wird eine V-förmige Furche in den Boden geformt, in welche die landwirtschaftlichen Produkte in flüssiger oder fester Form abgelegt werden. Ein solches Doppelscheibenschar offenbart beispielsweise die EP 1 911 340. Den bisher bekannt gewordenen Doppelscheibenscharen ist gemeinsam, dass die Scheibenscharstellung durch die Form des Scharhalters vorgegeben wird. Dies wird durch schräges Anschweißen von Achsstummeln oder werkzeugfallende Formgebung wie Massivumformung oder Formguss bewerkstelligt. Natürlich ist dies auch durch materialentfernende mechanische Bearbeitung möglich. Diese Verfahren sind jedoch alle entweder in der Formgebung ungenau oder aber aufwendig und teuer in der serienmäßigen Herstellung. Die DE 10 2010 037 240 A1 zeigt einen solchen Scharhalter, bei dem ein aufwendig herzustellender gebogener Achskörper mit einer äußerst komplizierten Geometrie durch den Scharträger hindurchgesteckt wird, wobei der Scharträger wiederum in mehreren Aufspannungen mechanisch bearbeitete Flanschflächen zur Vorgabe der Scheibenscharstellung aufweist. Aus der DE 12 95 260 ist ein Scheibenschar für Drillmaschinen bekannt, bei dem die Umlaufebene einer an dem Scharträger fliegend gelagerten Scheibe zur Lotrechten um einen spitzen Winkel geneigt ist. Die Größe dieses Winkels wird durch eine Beilage bestimmt, die im Winkel zueinanderliegende Stirnflächen aufweist und eine ringscheibenartige Dichtungslippe umfassen soll, die von der Seite des Scharträgers her an der Scheibe elastisch anliegt. Angesichts der gegenüber dem Zeitpunkt der Anmeldung der DE 12 95 260 erheblich erhöhten Fahrgeschwindigkeiten wäre der Einsatz eines solchen Schars heute nicht mehr denkbar.

Aufgabe der Erfindung ist es daher, eine kostengünstige sowie einfach und fehlerfrei zu montierende Befestigung der Scheibenschare bereitzustellen.

Erfindungsgemäß wird die Aufgabe nach den Merkmalen des Anspruchs 1 gelöst, wobei in den weiteren Patentansprüchen in vorteilhafter Weise ergänzende und alternative Lösungen beansprucht werden.

Der Hohlachsstummel liegt mit einem Flansch bzw. Bund mit abgewinkelter bzw. angeschrägter Flanschfläche an dem Scharträger an und gibt somit die Schrägstellung der Hohlachsstummel zueinander beziehungsweise zum Scharträger vor. Als vergleichsweise einfach herzustellendes wie zu montierendes Bauteil erfüllt der Hohlachsstummel dabei eine vorteilhafte Mehrfachfunktion, indem dieser zusätzlich die Winkellage der Ebene vorgibt, die sich in der Rotationsachse und einer zur Flanschfläche des Scharträgers senkrechten Achse schneidet. Der Hohlachsstummel weist eine dem Scharträger zugewandte Flanschfläche auf, die zu einer zu seiner Rotationsachse senkrechten Ebene abgewinkelt angeordnet ist. Außerdem legt der Hohlachsstummel die Winkellage einer Ebene fest, die eine durch die Rotationsachse und eine zur Flanschfläche des Scharträgers senkrechte Achse festgelegte Ebene schneidet.

Dass die Winkellage der Ebene durch formschlüssige Elemente festgelegt ist, welche den Hohlachsstummeln und/oder dem Scharträger zugeordnet sind, ist insofern vorteilhaft, als der Hohlachsstummel zugleich als Verdrehsicherung dient, so dass ein entsprechendes separates Bauteil eingespart werden kann. Stattdessen legen die formschlüssigen Elemente die Winkelposition beziehungsweise die Verdrehung der Hohlachsen seitlich auf den Scharträger gesehen fest. Eine gedachte Ebene, welche sich in den Rotationsachsen der Achsträger und einer Achse senkrecht auf einer Flanschfläche des Scharträgers schneidet und auf der abgeschrägten Flanschfläche des jeweiligen Hohlachsstummels senkrecht steht, schneidet den Abstandspunkt des geringsten Abstandes der Scheibenschare zueinander. Dieser Punkt liegt vorzugsweise unterhalb des Scharträgers und seitlich horizontal gemessen zwischen der Aufhängung des Scharträgers und den Hohlachstummeln oder direkt unter den Hohlachstummeln. Die Lage dieser Ebene und die Lage der formschlüssigen Elemente sind voneinander abhängig. Somit kann das Doppelscheibenschar und die Ausrichtung seiner Scheibenschare in ihrer Lage zur Scharträger fehlerfrei und definiert in einfacher Art montiert werden.

Es ist etwa daran gedacht, dass die formschlüssigen Elemente als ein von der Kreisform abweichender Querschnitt, vorzugsweise als Zapfenquerschnitt oder Durchbruchquerschnitt ausgebildet sind. Bei der Montage wird der Achsstummel von seiner Innenseite in den Scharträger eingesetzt und dann durch ein Befestigungsmittel und von außen durch die Lagereinheit fixiert. Dabei sind Scharträger und Flanschfläche erfindungsgemäß korrespondierend zueinander ausgebildet, mit einer scharträgerseitigen Aufnahme und einer Flanschfläche wahlweise in Form eines Polygons. Mit dem Zapfenquerschnitt werden die Achsstummel in die scharträgerseitige Aufnahme eingesetzt und dort auch verdrehsicher gehalten. Zwischen dem Zapfenquerschnitt und dem Hohlzylinder befindet sich die beschriebene Flanschfläche, mit welcher der Achsstummel an dem Scharträger anliegt. Durch die Wahl etwa eines Vierkant- oder Sechskantloches oder erfindungsgemäß wahlweise eines Fasenloches in dem Scharträger und passender Gegenform an der Flanschseite des Hohlachsstummels kann eine Verdrehsicherung einfach hergestellt werden, wobei diese in dem Scharträger Bestandteil des Zuschnitts sein kann. Auch stern- oder verzahnungsförmige Querschnitte sind denkbar. Somit kann die Ausrichtung der Scheibenschare sogar in mehreren Positionen in ihrer Drehung zur senkrechten Achse der Flanschfläche eingestellt werden. Montagefehler sind dank der Ausbildung dieses Achsstummels ausgeschlossen.

Auch unterschiedliche oder voneinander abweichende Ausrichtungen der Hohlachsstummel zueinander sind darstellbar.

In einer vorteilhaften Ausführung der Erfindung ist vorgesehen, dass die gegenüberliegenden Flanschflächen des Scharträgers aus einem Flachmaterial hergestellt und zumindest annähernd parallel zueinander angeordnet sind. Die Scharträger können somit kostengünstig beispielsweise aus einem Blechzuschnitt mit durchgehend gleicher Materialdicke in einer einzigen Aufspannung oder Lage ohne weitere Bearbeitung im Flanschbereich hergestellt werden.

Nach einer weiteren Ausführung der Erfindung ist vorgesehen, dass in den Scharträger beidseitig Hohlachsstummel eingesetzt und gemeinsam mittels eines durchgehenden Befestigungsmittels befestigt sind. Hierdurch können mittels eines einzigen Montagevorganges beide Scheibenschare mit einem Gewindebolzen oder Schrauben und Muttern an dem Scharträger befestigt werden, ohne dass eine nachträgliche Verschweißung notwendig wäre. Auch Nietverfahren oder andere Klemmspannung erzeugende Verfahren sind denkbar.

Grundsätzlich ist es denkbar, dass die Flanschfläche in den Hohlachsstummel integriert oder als separates Bauteil ausgebildet ist, welches mittels formschlüssiger Elemente verdrehfest zwischen dem Hohlachsstummel und einer Flanschfläche des Scharträgers angeordnet ist. Bei erstgenannter Variante bilden Achsstummel und Flanschfläche ein gemeinsames Bauteil, bei letztgenannter Variante können etwa durch die Wahl verschieden abgewinkelter Zwischenstücke unterschiedliche Winkelstellungen der Scheibenschare zueinander in einfacher Art erreicht werden. Insbesondere bei der Wahl unterschiedlicher Durchmesser von Scheibenscharpaaren ist die Winkelstellung der Scheibenschare zueinander so adaptierbar, dass sich immer ein minimaler Abstand der Scheiben an der engsten Stelle ergibt. Dieser Abstand kann auch auf 0 oder in einen theoretisch negativen Wert eingestellt werden, wodurch sich eine leichte Vorspannung der Scheibenschare an ihrem Berührungspunkt zueinander einstellt. Der Hohlachsstummel ist vorteilhafterweise als Bestandteil der Lagereinheit ausgebildet und kann in zusätzlicher Funktion als Lauffläche oder Innenring dienen und damit noch weitere Funktionen übernehmen und entsprechende separate Bauteile ersetzen.

In einer besonderen Ausführungsform sind die Scheibenschare zueinander seitlich versetzt, indem die Hohlachsstummel, bezogen auf eine zur Flanschfläche des Scharträgers parallele Ebene zueinander beabstandet positioniert sind. Durch diese vorzugsweise horizontal versetzte Anordnung kann in schwierigen Verhältnissen eine verbesserte Schnittwirkung des Doppelscheibenschares durch Pflanzenreste in den Boden erreicht werden.

Die Montage dieser Ausführungsform wird dadurch vereinfacht und günstig bewerkstelligt, indem die Hohlachsstummel mit einem Innengewinde versehen sind und mit einer Schraube oder einem Stehbolzen mit Mutter von der Innenseite gegen den Scharträger verspannt werden, also von der gegenüberliegenden Seite der Flanschfläche des Scharträgers. Somit können auch seitlich gesehen zueinander beabstandete Schare auf einem Scharträger schnell und zuverlässig befestigt werden. Durch Verwendung von insbesondere Innensechskant- oder Schrauben mit Innensternform kann der Scheibenabstand sogar sehr gering gehalten werden. Insbesondere bieten sich hier Schrauben mit angearbeiteter oder aufgetragener Sicherung gegen unbeabsichtigtes Lösen an.

Es empfiehlt sich außerdem, wenn die Hohlachsstummel in einem Ur- oder Umformverfahren hergestellt sind. Der Hohlachsstummel kann ohne Abtragung von Material in seiner Form hergestellt werden. Hierzu geeignet sind als formgebende Verfahren beispielsweise Guss-, Druckguss-, Spritzguss-, Schmiede-, Press- oder Sinterverfahren.

In einer besonders vorteilhaften Ausführungsform der Erfindung ist daran gedacht, dass die Hohlachsstummel aus Kunststoff hergestellt sind, der ggf. faserverstärkt ausgebildet sein kann. Die im Kunststoffspritzgussverfahren hergestellten Kunststoffteile reduzieren die Herstellkosten gegenüber spanenden Verfahren erheblich.

Das Verspannen der Hohlachsstummel gegen den Scharträger könnte Biegespannungen in dem als Bolzen ausgebildeten Befestigungsmittel hervorrufen. Um diese besser abstützen zu können, ist daran gedacht, dass zwischen den beiden Hohlachsstummeln und/oder zwischen den Hohlachsstummeln und dem Befestigungsmittel mindestens ein Stützelement angeordnet ist. Dazu wird im Durchbruch des Scharträgers zwischen den Hohlachsstummeln bzw. zwischen Hohlachsstummel und Befestigungsmittel ein solches Stützelement eingesetzt oder dem Scharträger zugeordnet, um den Biegekräften abstützend entgegen zu wirken. Ansonsten bestünde die Gefahr, dass das Befestigungsmittel sich in die Innenbohrungen des Hohlachsstummels einarbeitet, gerade wenn dieser aus Kunststoff hergestellt ist. In jedem Fall gilt es bei dieser Ausführungsform möglichst zu verhindern, dass der Kunststoff mit dem Bolzen in Kontakt kommt. Das Stützelement kann eine Unterlegscheibe oder ein dem Bolzendurchmesser angepasstes bzw. ein Bauteil sein, dessen Außenkontur von der Kreisform abweicht. Gedacht ist etwa an einen Blechzuschnitt.

Nach einer weiteren Ausführungsform der Erfindung ist vorgesehen, dass zumindest ein Scheibenschar zumindest teilweise aus einem elastisch verformbaren Material ausgebildet ist. Durch die wenigstens abschnittsweise elastische Ausbildung z. B. aus PUR oder Gummi können die Scheibenschare verformbar gegeneinander montiert werden. Hierdurch wird ein Selbstreinigungseffekt insbesondere bei klebrigen Bodenverhältnissen erreicht.

Nach einem weiteren Vorschlag ist es zweckmäßig, wenn
dass die beiden Scheibenschare einen unterschiedlichen Außendurchmesser aufweisend ausgebildet sind. Durch die Wahl unterschiedlicher Scheibendurchmesser wird die Schnittwirkung des größeren Scheibenschares insbesondere bei hohem Anfall von Ernteresten auf dem Boden verbessert. Verstopfungen und ein sogenanntes "Hairpinning", bei dem Pflanzenreste durch die Scheibenschare senkrecht in die Saatfurche gepresst werden, werden vermieden.

Die Erfindung zeichnet sich insbesondere dadurch aus, dass ein Doppelscheibenschar mit zwei zueinander V-förmig angewinkelten Scharen geschaffen ist, das eine einfache und kostengünstige Montage ermöglicht. In mehrfacher Hinsicht erweist sich dabei die Ausbildung der Hohlachsstummel als vergleichsweise einfach herzustellendes Bauteil als vorteilhaft, auf denen die Schare mittels Lagereinheiten drehbar gelagert sind. Formschlüssige Elemente sind den Hohlachsstummeln wie den Scharträgern zugeordnet, welche die Winkellage bzw. Verdrehung einer Ebene vorgeben, welche in der Rotationsachse und einer zur Flanschfläche des Scharträgers senkrechten Achse schneidet. Dabei schneidet diese Ebene einen Abstandspunkt, welcher unterhalb des Scharträgers liegt. In die Hohlachsstummel sind vorzugsweise Flanschflächen integriert, d. h. einteilig mit diesen hergestellt. Die Hohlachsstummel geben außerdem an ihrer dem Scharträger zugewandten Innenseite dank der abgewinkelten Flanschfläche die Schrägstellung zum Scharträger vor, bei den übrigen Bauteilen rund um die Befestigung und Lagerung kann auf kostengünstige Standardkomponenten zurückgegriffen werden. Zugleich dienen die Hohlachsstummel mit den polygonartig ausgebildeten Ansätzen an ihrer Innenseite als Verdrehsicherung. Der Scharträger kann beispielsweise ohne weitere Bearbeitung verschachtelt nebeneinander aus einer Blechplatine ausgeschnitten werden. Sehr genau und trotzdem günstig sind hier Laser- oder Wasserstrahl-Schneidverfahren, aber auch Stanz- oder Brennzuschnitte sind denkbar.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: die Schnittansicht durch ein Doppelscheibenschar in perspektiver Darstellung,
- Figur 2: einen Schnitt durch die beiden Achsen eines Doppelscheibenschares und des Scharträgers,
- Figur 3: die Seitenansicht der Hälfte eines Doppelscheibenschares,
- Figur 4: die perspektivische Ansicht eines Hohlachsstummels,
- Figur 5: eine Variation zu Figur 4,
- Figur 6: eine Variation zu Figur 2 und
- Figur 7: eine variierte Schnittansicht zu Figur 1.

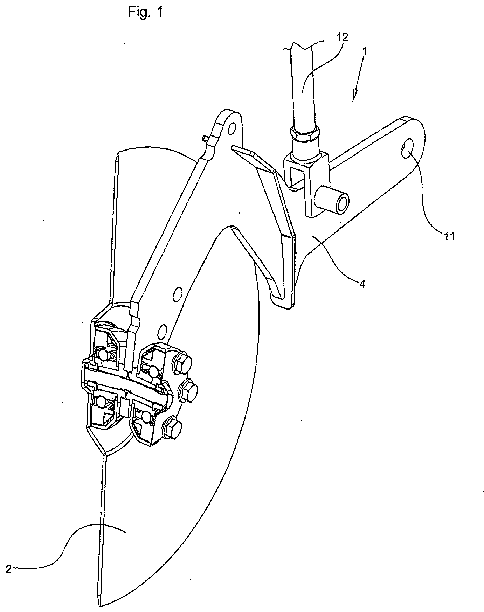

Figur 1 zeigt die Schnittansicht durch ein Doppelscheibenschar in perspektiver Darstellung. Die rechte Scharscheibe ist der besseren Sicht auf den Scharhalter wegen nicht dargestellt. Das Doppelscheibenschar 1 ist seitlich beabstandet zu weiteren, nicht dargestellten Doppelscheibenscharen mit der vorderen Bohrung 11 mittels Lagerelementen vertikal beweglich an einem Querträger verbunden, welcher wiederum mit dem Hauptrahmen einer Verteilmaschine verbunden ist. Eine vertikale, beweglich mit dem Scharträger verbundene Strebe 12 kann mit einer Feder oder anderer Krafteinwirkung gegenüber einem Widerlager eine Druckkraft auf den Scharträger 4 und das Doppelscheibenschar 1 ausüben, damit dieses in den Boden eindringt. Durch die V-Stellung der Scheibenschare zueinander wird der Boden V-förmig auseinandergeschoben. In diese V-Rille kann das landwirtschaftliche Produkt mit nicht weiter dargestellten Ausbringleitungen, welche in den Zwischenraum zwischen den Scheibenscharen 2 hineinragen, eingebracht werden und die V-Rille mit einem Stützrad oder einem Zustreicher wieder verschlossen werden. Ein Stützrad oder eine sonstige Begrenzungseinrichtung kann zudem die Eindringtiefe des Doppelscheibenschares in den Boden begrenzen.

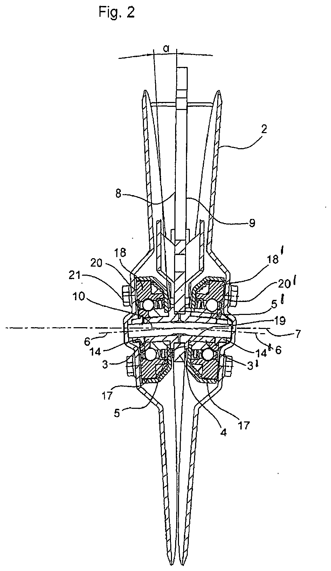

Im Schnittbild gemäß Fig. 2 erkennbar sind die beiden Hohlachsstummel 3, 3' mit ihren abgeschrägten Flanschflächen 5, 5', die durch den Bolzen 10 mit Muttern 14, 14' gegen die parallelen Flächen 8, 9 des Scharträgers 4 verspannt sind. Durch den schräg angeordneten Winkel α der Hohlachstummel 3 ergibt sich die V-Stellung der Scharscheiben zueinander. Als sechseckiger Durchbruch 23 ausgebildete formschlüssige Elemente 15 im Scharträger 4 sichern die Sechskantansätze der Hohlachsstummel 3 gegen Verdrehung gegenüber dem Scharträger 4 und geben die Lage der Ebene 13 vor. Auf die Hohlachsstummel 3, 3' sind die mit einer Schutzkappe 17 und Dichtungen versehenen Lagereinheiten 18, 18' aufgeschoben oder gepresst, welche ebenfalls durch die Muttern 14, 14' gegen die der schrägen Flanschfläche 5, 5' gegenüberliegende Bundfläche 19 der jeweiligen Hohlachsstummel 3 verspannt sind. In die Lagereinheit 18, 18' sind in der äußeren Flanschfläche 20, 20' Gewindelöcher eingelassen. Gegen diese Flanschflächen 20, 20' sind die jeweiligen Scheibenschare 2 mit Schrauben 21 in den Gewindelöchern der Lagereinheiten 18, 18' befestigt. Die Flanschfläche 20, 20' kann sich auch über die Schutzkappe 17 hinaus erstrecken, Dann können die Schrauben 21 durch den Flansch hindurch mit Muttern auf der gegenüberliegenden Seite gesichert werden.

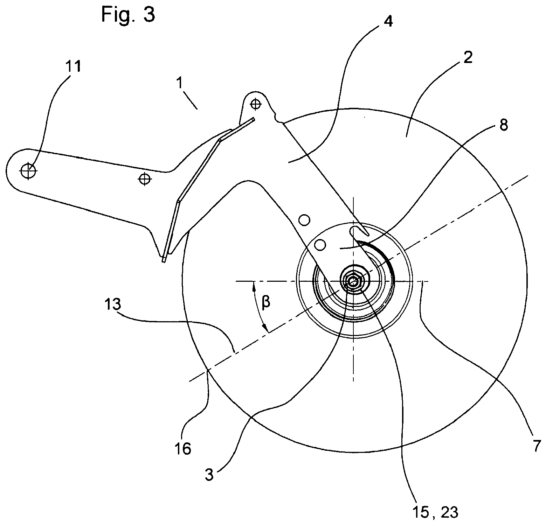

Die Seitenansicht in Fig. 3 zeigt eine teildemontierte Darstellung des Doppelscheibenschares 1. Die Achse 7 steht senkrecht auf der Flanschfläche 5 des Schartägers 4. Der Abstandspunkt 16 mit dem geringsten Abstand der Scharscheiben zueinander ist somit relativ zum Scharträger 4 ebenfalls festgelegt und liegt auf oder in der Nähe der Ebene 13 im Randbereich der Scheibenschare 2. Der Winkel β zeigt die Lage der Ebene 13 und den kleinsten Abstandspunkt 16 der Scharscheiben 2 in seiner Lage zum Scharträger mit Blick in Richtung der Achse 7. Durch die Lage der formschlüssigen Elemente 15, hier des sechseckigen Durchbruchs 23 wird der Winkel β vorgegeben.

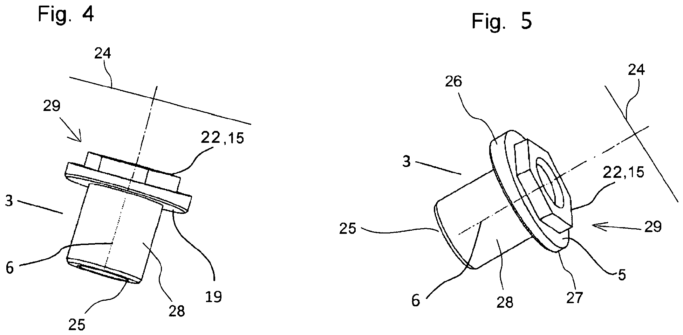

Die Perspektive in Fig. 4 zeigt die Sicht auf die Bundfläche 19 des Hohlachsstummels 3 mit seiner Rotationsachse 6. Die Lagereinheit 18 wird von der Außenseite 25 auf den Hohlzylinder 28 aufgeschoben, bis die Lagereinheit 18 an der Bundfläche 19 ihren definierten Sitz erreicht hat. Die Hohlachsstummel 3 werden untereinander mit einem hier nicht dargestellten Befestigungsmittel mit ihren Innenseiten 29 zueinander zeigend gegen den Scharträger verbunden. Mit 24 ist die senkrecht zur Achse 6 wie zur Blattebene verlaufende Ebene bezeichnet. Die Ebene 24 verläuft ebenfalls parallel zur planen Fläche der Außenseite 24 des Hohlachsstummels 3.

Ergänzend lässt Fig. 5 die Sicht auf den Hohlachsstummel 3 mit seiner Rotationsachse 6 erkennen. Der hier in Sechskantform dargestellte Zapfen 22 sichert den Hohlachsstummel 3 gegen Verdrehung. Ebenfalls sichtbar ist die zur senkrechten Ebene der Rotationsachse 6 abgeschrägt angeordnete Flanschfläche 5, welche in ihrer Tiefe zwischen den beiden gegenüberliegenden Enden 26 und 27 konstant zunimmt und damit die abgewinkelte Positionierung vorgibt.

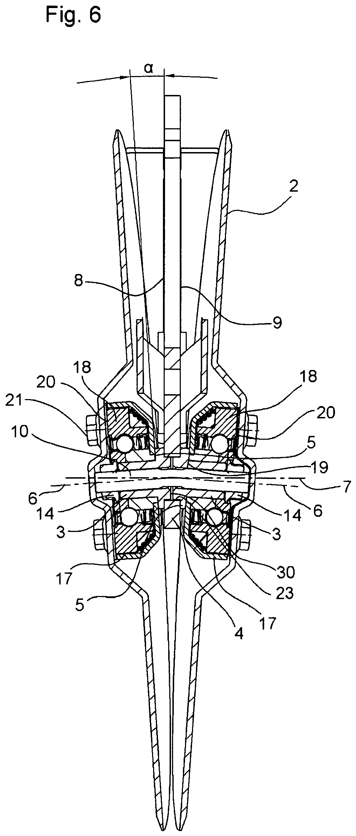

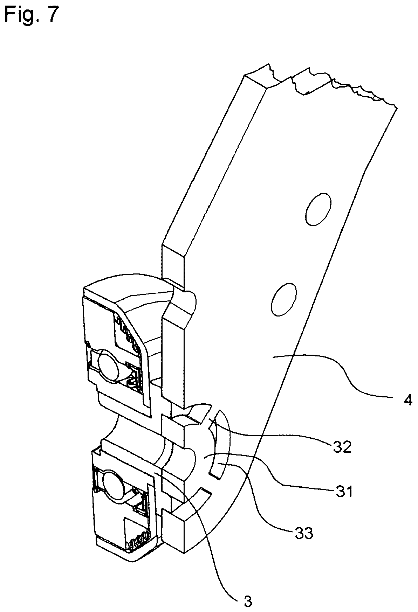

Fig. 6 zeigt die gleiche perspektivische Schnittansicht wie Fig 2. Jedoch ist in Fig. 7 ein zusätzliches Stützelement 30 als Formelement eingelegt, welches einen passenden Innendurchmesser zum Bolzen 10 aufweist und in seiner Außenkontur korrespondierend zur Durchbruchkontur 23 des Scharträgers 4 ausgeformt ist. Bei einer in der Scharträgerebene zueinander versetzten Anordnung der Hohlachstummel 3, 3' kann es sinnvoll sein, das jeweilige Stützelement 30 mit einem Außenbund zu versehen, welcher auf der dem Hohlachstummel 3,3' gegenüberliegenden Seite des Scharträgers 4 eine Anlagefläche zum Scharträger 4 bildet. Die Innenbohrung des Hohlachstummels 3, 3' ist dabei vorzugsweise asymmetrisch angeordnet, um mit dem Bolzen 10 zur Achse 6 eine Flucht zu bilden. Hierfür kann das Stützelement 30 sogar mit einem Innengewinde versehen sein, um dem als Schraube ausgeführten Bolzen 10 von Seiten des Hohlachstummels 3, 3' gegen den Scharträger 4 zu verspannen.

Schließlich stellt Fig. 7 einen weiter freigestellten, perspektivischen Querschnitt dar, wie bereits in Fig. 1 beschrieben. Der Übersichtlichkeit zuliebe wurde die Schraffur wegelassen. Erkennbar ist, wie der Hohlachstummel 3 korrespondierend in die partiellen Ausbrüche 33 des Scharträgers 4 eingreift. Das Stützelement 31 und die dieses Stützelement 31 tragenden Stege 32 sind hier aus dem Scharträgermaterial durch einfachen Laserschnitt ausgeschnitten. Ebenfalls reicht auch ein einzelner Steg 32 mit korrespondierender Formgebung zum Hohlachstummel 3,3' zur Stabilisierung des hier nicht dargestellten Bolzens 10.

## Patentansprüche

1. Doppelscheibenschar (1) mit zwei zu einander V-förmig angewinkelten Scheibenscharen (2), welche auf Hohlachsstummeln (3) mittels Lagereinheiten (18) drehbar gelagert sind und mit den Hohlachsstummeln (3) und deren Flanschflächen (5) gegen die Flanschflächen (8, 9) eines Scharträgers (4) vorgespannt befestigt sind,
wobei der Hohlachsstummel (3) eine dem Scharträger (4) zugewandte Flanschfläche (5) aufweist, die zur senkrechten Ebene (24) der Rotationsachse (6) des Hohlachsstummels (3) abgewinkelt angeordnet ist und dass der Hohlachsstummel (3) die Winkellage einer Ebene (13) festlegt, die sich in der Rotationsachse (6) und einer zur Flanschfläche (8, 9) des Scharträgers (4) senkrechten Achse (7) schneidet,
**dadurch gekennzeichnet,**
**dass** die Winkellage der Ebene (13) dadurch festgelegt ist, dass die Flanschfläche (5) des Hohlachsstummels (3) und die scharträgerseitige Aufnahme in Form eines zentrisch zu dem Hohlachsstummel (3) angeordneten Polygons oder Fasenloches korrespondierend zueinander ausgebildet sind.

2. Doppelscheibenschar nach Anspruch 1,
**dadurch gekennzeichnet,**
**dass** die gegenüberliegenden Flanschflächen (8, 9) des Scharträgers (4) aus einem Flachmaterial hergestellt und zumindest annähernd parallel zueinander angeordnet sind.

3. Doppelscheibenschar nach Anspruch 1,
**dadurch gekennzeichnet,**
**dass** in den Scharträger (4) beidseitig Hohlachsstummel (3) eingesetzt und gemeinsam mittels eines durchgehenden Befestigungsmittels (10) befestigt sind.

4. Doppelscheibenschar nach Anspruch 1,
**dadurch gekennzeichnet,**
**dass** die Flanschfläche (5) in den Hohlachsstummel (3) integriert oder als separates Bauteil ausgebildet ist, welches mittels formschlüssiger Elemente (15) verdrehfest zwischen dem Hohlachsstummel (3) und einer Flanschfläche (8, 9) des Scharträgers (4) angeordnet ist.

5. Doppelscheibenschar nach Anspruch 1,
**dadurch gekennzeichnet,**
**dass** die Hohlachsstummel (3), bezogen auf eine zur Flanschfläche (8, 9) des Scharträgers (4) parallele Ebene zueinander beabstandet positioniert sind.

6. Doppelscheibenschar nach Anspruch 1,
**dadurch gekennzeichnet,**
**dass** die Hohlachsstummel (3) vorzugsweise mit einer Schraube oder einem Stehbolzen mit Mutter von ihrer Innenseite (29) gegen den Scharträger (4) verspannbar ausgebildet sind.

7. Doppelscheibenschar nach Anspruch 1,
**dadurch gekennzeichnet,**
**dass** die Hohlachsstummel (3) in einem Ur- oder Umformverfahren hergestellt sind.

8. Doppelscheibenschar nach Anspruch 1,
**dadurch gekennzeichnet,**
**dass** die Hohlachsstummel (3) aus Kunststoff hergestellt sind.

9. Doppelscheibenschar nach Anspruch 3,
**dadurch gekennzeichnet,**
**dass** zwischen den beiden Hohlachsstummeln (3, 3') und/oder zwischen den Hohlachsstummeln (3, 3') und dem Befestigungsmittel (10) ein Stützelement (30, 31) angeordnet ist.

10. Doppelscheibenschar nach Anspruch 1,
**dadurch gekennzeichnet,**
**dass** zumindest ein Scheibenschar (2) zumindest teilweise aus einem elastisch verformbaren Material ausgebildet ist.

11. Doppelscheibenschar nach Anspruch 1,
**dadurch gekennzeichnet,**
**dass** die beiden Scheibenschare (2) einen unterschiedlichen Außendurchmesser aufweisend ausgebildet sind.

## Claims

1. Double disc coulter (1) with two disc coulters (2) angled towards each other to form a V shape, which are pivotable on hollow axle stubs (3) by means of bearing units (18) and are fixed pretensioned with the hollow axle stubs (3) and their flange faces (5) against the flange faces (8, 9) of a coulter bar (4),
whereby the hollow axle stub (3) has a flange face (5) facing the coulter bar (4) that is arranged at angle to the vertical plane (24) of the rotation axis (6) of the hollow axle stubs (3) and that the hollow axle stub (3) determines the angular position of a plane (13) that intersects in the rotation axis (6) and an axis (7) vertical to the flange face (8, 9) of the coulter bar (4)
**characterised in that**
the angular position of the plane (13) is determined through the flange face (5) of the hollow axle stubs (3) and the holder on the coulter bar are designed corresponding to one another in the form of a polygon or chamfered hole arranged centrally in the hollow axle stub (3).

2. Double disc coulter in accordance with claim 1,
**characterised in that**
the opposing flange faces (8, 9) of the coulter bar (4) are made of flat material and are arranged at least approximately parallel to each other.

3. Double disc coulter in accordance with claim 1,
**characterised in that**
hollow axle stubs (3) are inserted on both sides into the coulter bar (4) and are fixed jointly by means of a continuous fastener (10).

4. Double disc coulter in accordance with claim 1,
**characterised in that**
the flange face (5) is integrated in the hollow axle stub (3) or designed as a separate part that is arranged by means of positive-fit elements (15) so that it cannot rotate between the hollow axle stub (3) and a flange face (8, 9) of the coulter bar (4).

5. Double disc coulter in accordance with claim 1,
**characterised in that**
the hollow axle stubs (3), in relation to a plane parallel to the flange face (8, 9) of the coulter bar (4), are positioned at a distance from each other

6. Double disc coulter in accordance with claim 1,
**characterised in that**
the hollow axle stubs (3) are designed to be clampable against the coulter bar (4) from the inside (29) preferably with a screw or a space bolt with nut.

7. Double disc coulter in accordance with claim 1,
**characterised in that**
the hollow axle stubs (3) are manufactured using a primary shaping or forming process.

8. Double disc coulter in accordance with claim 1,
**characterised in that**
the hollow axle stubs (3) are made of plastic.

9. Double disc coulter in accordance with claim 3,
**characterised in that**
a supporting element (30, 31) is arranged between the two hollow axle stubs (3, 3') and/or between the hollow axle stubs (3, 3') and the fastener (10).

10. Double disc coulter in accordance with claim 1,
**characterised in that,**
at least one disc coulter (2) is made at least in part from an elastically deformable material.

11. Double disc coulter in accordance with claim 1,
**characterised in that,**
the two disc coulters (2) are designed to have different outside diameters.

## Revendications

1. Soc à disque double (1) avec deux socs à disque (2) disposés l'un par rapport à l'autre de façon à former un angle en forme de V, qui sont suspendus de façon rotative sur paliers sur des moignons d'axe creux (3) au moyen d'unités de palier (18), et qui sont fixés de façon préalablement serrés avec les moignons d'axe creux (3) et leurs surfaces de bride (5) contre les surfaces de bride (8, 9) d'un support de soc (4),
sachant que le moignon d'axe creux (3) présente une surface de bride (5) tournée vers le support de soc (4) qui est disposée de manière à former un angle par rapport au plan vertical (24) de l'axe de rotation (6) du moignon d'axe creux (3) et que le moignon d'axe creux (3) détermine la position d'angle d'un plan (13) qui se coupe dans l'axe de rotation (6) et un axe (7) vertical par rapport à la surface de bride (8, 9) du support de soc (4),
**caractérisé par le fait**
**que** la position d'angle du niveau (13) est déterminée par le fait que la surface de bride (5) du moignon d'axe creux (3) et le support de la réception côté soc sont réalisés de façon à correspondre l'un à l'autre sous la forme d'un polygone disposé de façon centrée par rapport au moignon d'axe creux (3) ou d'un trou de chanfrein.

2. Soc à disque double selon la revendication 1,
**caractérisé par le fait**
**que** les surfaces de bride (8, 9) du support de soc (4) situées l'une en face de l'autre sont fabriquées dans un matériau plat et sont disposées au moins à peu près parallèlement l'une par rapport à l'autre.

3. Soc à disque double selon la revendication 1,
**caractérisé par le fait**
**que** dans le support de soc (4) sont insérés des deux côtés des moignons d'axe creux (3) qui sont fixés ensemble au moyen d'un moyen de fixation (10) traversant de part en part.

4. Soc à disque double selon la revendication 1,
**caractérisé par le fait**
**que** la surface de bride (5) est intégrée dans le moignon d'axe creux (3) ou est réalisé en tant que composant séparé qui est disposé au moyen d'éléments (15) de forme complémentaire entre le moignon d'axe creux (3) et une surface de bride (8, 9) du support de soc (4).

5. Soc à disque double selon la revendication 1,
**caractérisé par le fait**
**que** les moignons d'axe creux (3) sont positionnés à une certaine distance l'un de l'autre par rapport à un niveau parallèle à la surface de bride (8, 9) du support de soc (4).

6. Soc à disque double selon la revendication 1,
**caractérisé par le fait**
**que** les moignons d'axe creux (3) sont réalisés de préférence avec une vis ou un boulon d'entretoisement avec écrou depuis la côté intérieur (29) de façon à pouvoir être serrés contre le support de soc (4).

7. Soc à disque double selon la revendication 1,
**caractérisé par le fait**
**que** les moignons d'axe creux (3) sont réalisés à partir d'un procédé de formage initial ou de déformation.

8. Soc à disque double selon la revendication 1,
**caractérisé par le fait**
**que** les moignons d'axe creux (3) sont réalisés en plastique.

9. Soc à disque double selon la revendication 3,
**caractérisé par le fait**
**qu'**un élément de soutien (30, 31) est disposé entre les deux moignons d'axe creux (3, 3') et/ou entre les moignons d'axe creux (3, 3') et le moyen de fixation (10).

10. Soc à disque double selon la revendication 1,
**caractérisé par le fait**
**qu'**au moins un soc à disque (2) est réalisé en partie à partir d'un matériau pouvant être déformé élastiquement.

11. Soc à disque double selon la revendication 1,
**caractérisé par le fait**
**que** les deux socs à disque sont réalisés en présentant un diamètre (2) extérieur différent.
